# EUROPEAN PATENT APPLICATION

(11) **EP 0 814 269 A2**
(43) Date of publication of application: **29.12.1997**
(21) Application number: 97109764.7
(22) Date of filing: 16.06.1997
(51) Int. Cl.: F04D 25/06

(54) **Air moving device**

(30) Priority: 20.06.1996 US 671994
(71) Applicant: EASTMAN KODAK COMPANY, Rochester, New York 14650-2201 (US)
(72) Inventor: Kenny, Gary R., c/o Eastman Kodak Company, Rochester, New York 14650-2201 (US); Smith, Dean Leonard, c/o Eastman Kodak Company, Rochester, New York 14650-2201 (US); Kerr, Roger Stanley, c/o Eastman Kodak Company, Rochester, New York 14650-2201 (US)
(74) Representative: Lewandowsky, Klaus, Dipl.-Ing.

(57) **Abstract**

An air moving device (10) has a backward curved impeller (18) driven by a compact planar dc motor (30) for producing air velocities and with the capability of producing superior static pressure performance. The impeller (18) can achieve a speed in the range of about 4000 RPM to about 15000 RPM and produce a static pressure of up to about 15 mm of Hg.

## Description

### Cross-Reference to Related Applications

This application is related to the following concurrently filed applications: Serial No. 08/672,893 for "Image Processing Equipment" by Gary R. Kenny, Dean L. Smith, and Roger S. Kerr; and Serial No. 08/674,221 for "An Improved Heat Exchanger" by Gary R. Kenny, Dean L. Smith, and Roger S. Kerr.

### Field of the Invention

The invention relates to air moving devices, and more particularly, the invention concerns a compact air moving device having a backward curved impeller rotatably driven by a dc planar motor that achieves air flow characteristics comparable to conventional larger devices while providing enhanced static pressure capability.

### Background of Invention

Typically air moving devices, such as a blower or fan, are used for cleaning, media transport and cooling. They may be used in conjunction with other devices, like heat exchangers such as the one described in U.S. Serial No. 08/674,221, hereby incorporated herein by reference, for facilitating the heat transfer process between surfaces or bodies. One way to facilitate the transfer of heat is by increasing the surface area of the heated body or surface in contact with a cooling air stream. Another way to facilitate the heat transfer process is to increase the air velocity by passing through the heat sink element of the heat exchanger. In both cases, the thermal energy of the heated body is transferred into the air or fluid stream created by the air moving device.

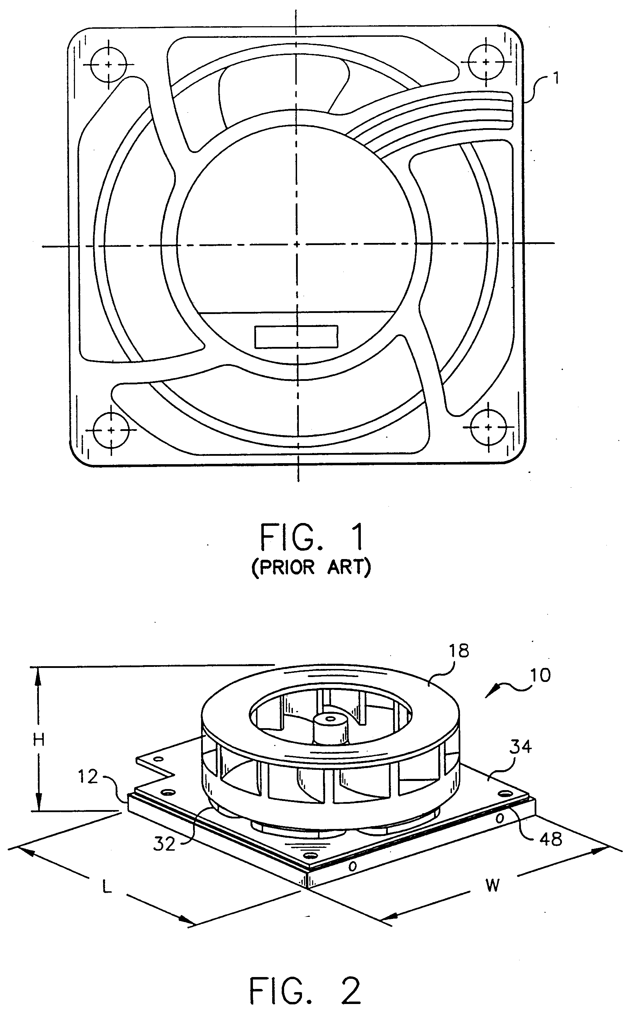

Depicted in Figure 1, a typical tubeaxial fan of the prior art is illustrated. According to Japan Servo Catalogue, page 16 (undated, but available before the filing of this application), a typical tubeaxial fan **1** (approximately 2.36 in. x 2.36 in. x 1 in.) is capable of delivering a static pressure of 0.24 inches of water and a free air delivery of 19.4 cubic feet per minute (CFM). Other models which are larger in size (approximately 6.77 in. x 5.9 in. x 2 in.) are capable of producing up to about 230 CFM but the maximum static pressure capability is only about 0.75 inches of water. Therefore, a shortcoming of existing tubeaxial fans devices is that they are not capable of delivering static pressures exceeding about 0.75 inches of water. Another shortcoming of existing air moving devices is that in order to achieve enhanced delivery of static pressure, a much larger blower is required, which would restrict its utility particularly in environments having limited space.

Therefore, there persists a need for an improved air blower device that is compact, can supply enough power to generate high air velocities and can overcome high static pressures, for instance, in a high surface area heat sink, while being inexpensive to manufacture and requiring low maintenance.

### Summary of the Invention

It is, therefore, an object of the invention to provide an improved air moving device that provides enhanced airflow performance characteristics.

It is a feature of the invention that an air moving device has a backward curved impeller rotatably driven by a compact planar dc motor for achieving superior air flow performance in applications where space is at a premium.

Another object of the invention is to provide an improved air moving device that is easy to manufacture, lightweight, and is cost effective to operate.

Yet another object of the invention is to provide an improved air moving device that has greater reliability and requires less maintenance than existing devices.

To overcome one or more problems in the prior art, there is provided in one aspect of the invention, an air moving device comprising a support means and at least one bearing supported in the support means. A rotatable shaft has an impeller fixedly supported thereon and passes through the central portion of the support means. The shaft, therefore, generally defines a central axis passing through the support means. The impeller includes a front air moving side and backside, and a plurality of spatially separated backward curved fins arranged symmetrically on the front air moving side about the central axis. A magnetic member is arranged about the backside of the impeller. Means for rotating the rotatable shaft includes a plurality of electromagnetic coils arranged for commutatively cooperating with the magnetic member. Moreover, means for actuating the means for rotating provides the commutation current to produce rotational movement of the impeller. Consequently, the rotational movement of the impeller can achieve a speed in the range of about 4000 RPM to about 15000 RPM and produce a static pressure of up to about 15 mm of Hg.

It is an advantage of the improved air moving device of the invention that backward curved blades driven by a compact dc planar motor drive produces a high air velocity capable of achieving up to about two orders of magnitude increase in static pressure in fluid restrictive systems, such as, high surface area heat sinks.

### Brief Description of the Drawings

The foregoing as well as other objects, features and advantages of this invention will become more apparent from the appended Figures, wherein like reference numerals denote like elements, and wherein:
Figure 1 is a prior art air moving device;
Figure 2 is a perspective view of the air moving device of the invention;
Figure 3 is an exploded view of the air moving device of the invention;
Figure 4 is a cross section view of an alternative embodiment of the invention;
Figure 5 shows the air moving performance curves of a tubeaxial fan compared to the invention of the same geometrical proportions;
Figure 6 is a perspective view of an application of the invention on a heat sink;
Figure 7 shows a typical speed-torque curve for DC motor drive of the invention; and,
Figures 8-10 show typical air mover performance curves of subject invention for different impeller inlet diameters.

### Description of Preferred Embodiments

Turning now to the drawings, and in particular to Figs. 2-3, the air moving device **10** in accordance with the principles of the invention is illustrated. Broadly defined, air moving device **10** comprises a support means **12** and at least one bearing **14** supported in the support means **12**. A rotatable shaft **16** has an impeller **18** fixedly supported thereon. Rotatable shaft **16** passes through the central portion of the support means **12**, thereby generally defining a central axis. The impeller **18** includes a front air moving side **20** and backside **22**, and a plurality of spatially separated backward curved fins **24** arranged symmetrically on the front air moving side **20** about the central axis. A magnetic member **26** (described further below) is arranged about the backside **22** of the impeller **18**. Means **30** for rotating the rotatable shaft **16** includes a plurality of electromagnetic coils **32** arranged for commutatively cooperating with the magnetic member **26**. Moreover, circuit board **34** for actuating the means **30** for rotating provides the commutation current to produce rotational movement of the impeller **18**. Commutation current energizes the electromagnetic coils **32** in a predetermined sequence that facilitates the rotation of the magnetic member **26**. Consequently, the rotational movement of the impeller **18**, as described further below, can achieve a speed in the range of about 4000 RPM to about 15000 RPM and deliver a static pressure of up to about 15 mm of Hg.

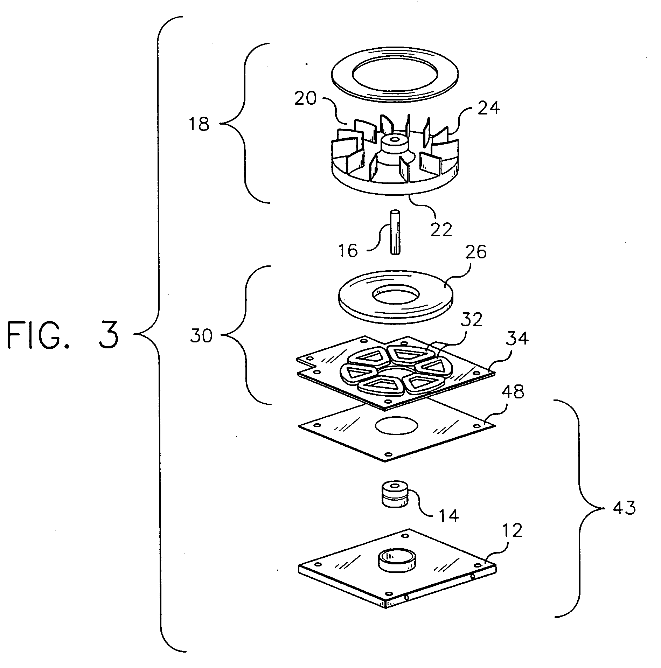

In the preferred embodiment of the invention, means **30** for rotating shaft **16** is a compact dc planar motor of the type described in commonly owned U.S. Patent No. 5,146,144, hereby incorporated herein by reference. The dc planar motor is operably connected to the impeller **18**, for producing the rotational movement of the backward curved fins **24**. Illustrated in Figure 3, dc planar motor **30** comprises an actuating means or circuit board **34** for actuating the motor **30**.

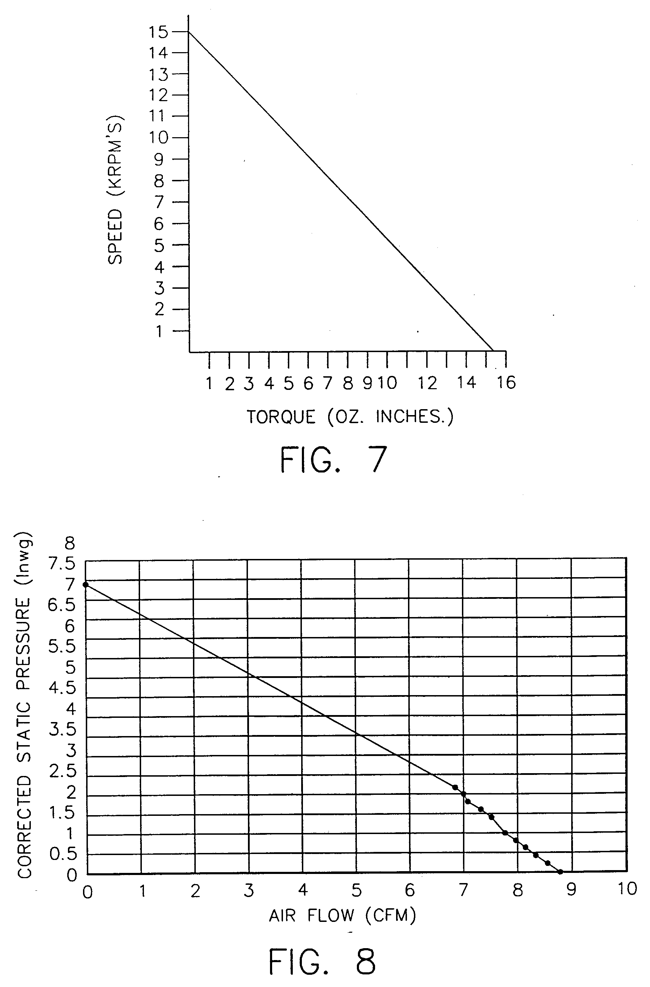

Circuit board **34** includes a plurality of metallic coils **32** arranged in magnetic proximity to magnetic member **26** mounted to the backside (nonair moving side) of impeller **18**. The metallic coils **32** are configured to receive a current and thereby produce rotational movement of the impeller **18** in response to the current. It has been our experience that by utilizing the dc planar motor **30** coupled with backward curved impeller **18**, illustrated in Figure 3, we are now able to produce the dc motor/blower combination of the invention similar in geometric proportion to existing industry standard tubeaxial fans that maintain similar airflow characteristics and provide one to two orders of magnitude increase in static pressure capability. The planar dc motor is compact (very much smaller in size than existing motors for similar applications) and is capable of producing a sufficient torque and speed for the impeller **18** to produce up to about 8 inches of water in a package size less than about 125 cm³. As shown in the data of Figure 7, the preferred dc motor **30** is capable of producing an impeller **18** velocity in the range of about 4000 RPM to about 15000 RPM.

More particularly, according to performance curve in Fig.7, drive means or dc motor **30** is configured to produce an impeller speed of about 4000 RPM to about 15000 RPM. The full range of speeds that impeller **18** is capable of achieving by employing the dc motor of the invention is shown clearly in Fig. 7.

Referring again to Fig. 3, a magnetic member **26**, preferably a multipole permanent magnet, is mounted to the backside (nonair moving side) of the impeller. Magnetic member or permanent magnet **26**, cooperates with the dc planar motor **30**, discussed above, for controlling the rotation of impeller **18**.

Moreover, support means **12** (referenced above) includes at least one bearing **14** to hold the shaft **16**, a base plate **12** to accept the at least one bearing **14**, and a flux return plate **48** to minimize eddy current loss in the dc planar motor **30**, described above. It should be apparent to skilled artisans that base plate **12** may either be mounted in the support means **12** or it may be integrated into the assembly.

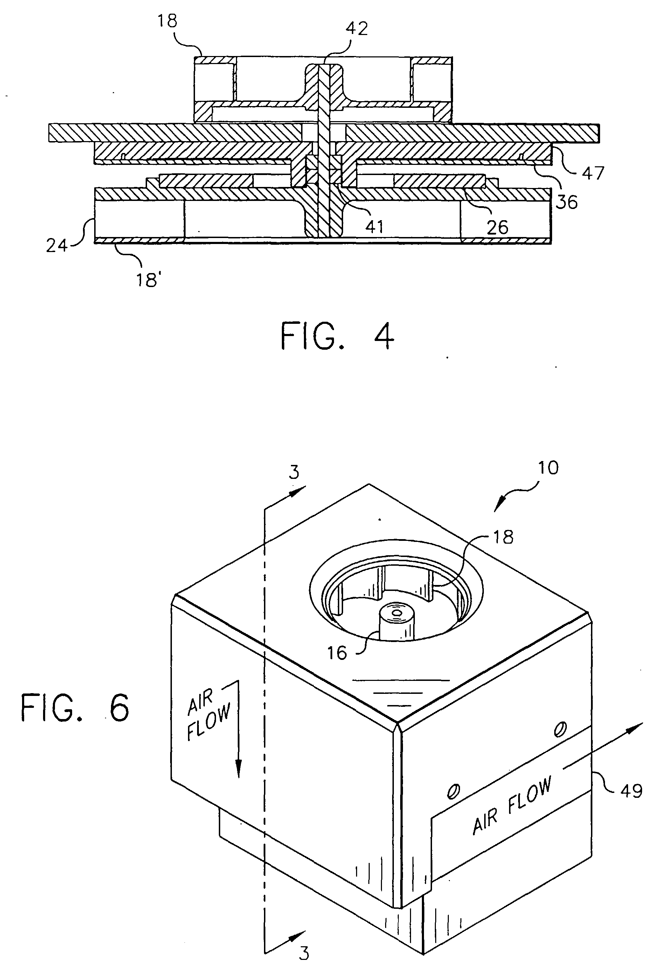

According to Fig. 4, in an alternative embodiment of the invention, the air moving device **10** can comprise dual impellers **18**, **18'**. The embodiment of the invention lends itself to a dual impeller **18**, **18'** (of different sizes or inlet diameters) configuration without dramatically impacting the design or overall dimensions (height) of the air moving device. The air moving device supporting dual impellers **18**, **18'** can be used to obtain different flow characteristics from a single drive means. Moreover, the air moving device of this embodiment, can also be used to produce a positive pressure from one impeller **18** and a negative pressure or vacuum from the other impeller **18'**. Thus, according to Figure 4, an air moving device **10** comprises two impellers **18**, **18'** joined by a common shaft **42**, at least one bearing **41**, a common drive means **36** and base assembly **47**. The preferred drive means, of course, is the dc planar motor described above.

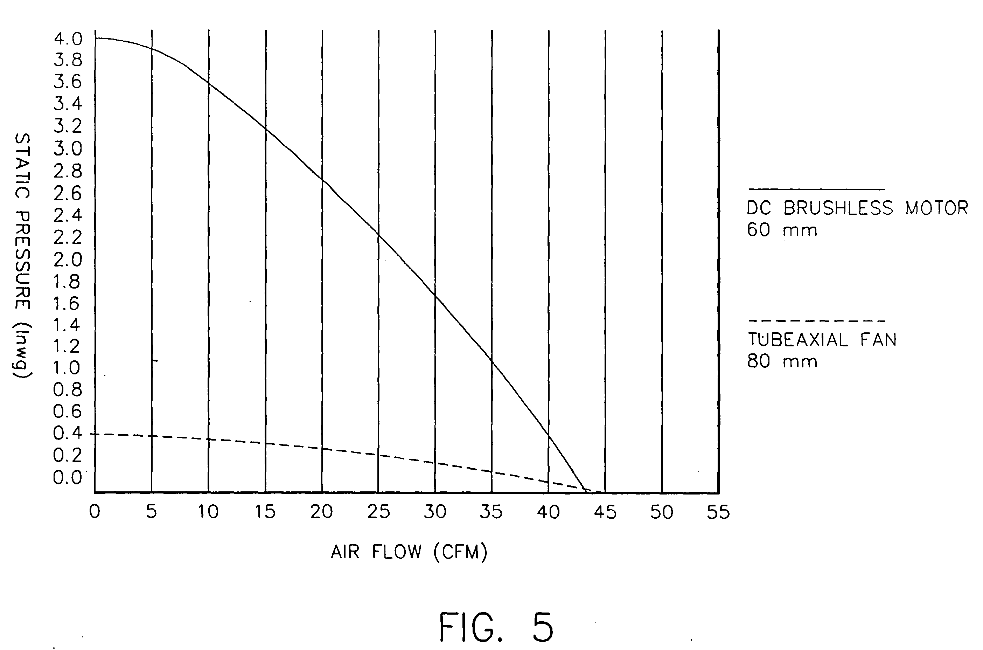

In Fig. 5, a comparison of performance curves of a prior art tubeaxial fan and the air moving device **10** of the invention is depicted. In this comparison, both air movers have a free air delivery of about 45 CFM. Free air delivery is defined as the volume of air displaced without any restrictions per unit of time. The results indicate that the air moving device **10** of the invention produces at least an order of magnitude increase (compared to the tubeaxial type) in static pressure with no increase in size. This result would clearly be unexpected on the basis of their similarity in size, as described further below.

An important advantage of the air moving device **10** of the invention is that it can produce superior air flow performance characteristics (as mentioned above), while being compact. In Figure 2, in a preferred embodiment, air moving device **10** has a height (h) of about 1.125 inches (2.875 cm); a length (l) from about 2 inches (5.08 cm) to about 6 inches (15.24 cm); and a width (w) from about 2 inches (5.08 cm) to about 6 inches (15.24 cm). Consequently, air moving device 10 can be used in a variety of applications where space is at a premium.

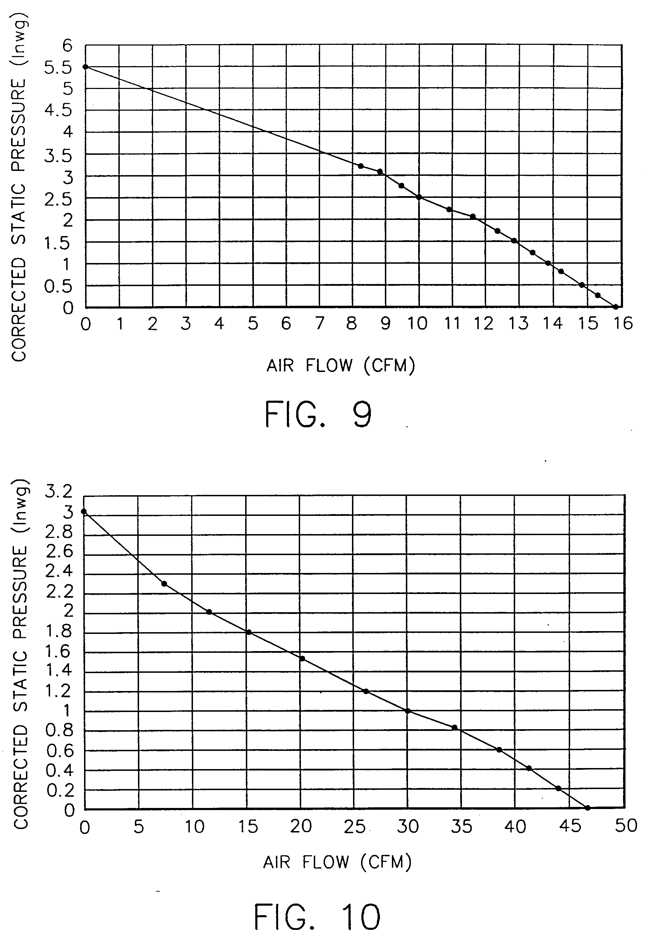

As indicated above, the preferred drive means or dc motor **30**, is capable of producing a static pressure up to about 8 inches of water. Figures 8, 9, and 10 shows the performance curve of air moving devices **10** as a function of resistance to airflow (static pressure). The results generally indicate that this compact air moving device **10** employing our planar dc motor **30** is capable of achieving 20x or about two orders of magnitude increase in static pressure compared to a typical tubeaxial fan, such as the one described in the prior art above. According to Figures 8, 9, and 10, performance curves for air moving device **10** are depicted for a backward curve impeller **18** (or wheel) where the outside dimension of the impeller **18** (wheel) is held constant. The inside diameter (or inlet area) of the impeller **18** (wheel) is then varied, which effects the slope of the air movers performance curve. Thus, by varying the dimensions of the air moving device **10**, a variety of air mover performance curves are obtainable. This applies to both the inlet diameters as well as the outside diameter.

### Operations

Referring again to Fig. 6, air moving device **10**, as previously described, is shown in arranged in a heat sink **49** as disclosed in concurrently filed U.S. Application 08/674,221, incorporated herein by reference. It should be apparent that this embodiment of the air moving device **10** can easily be integrated into an application where a compact high velocity blower or fan is needed and space is at a premium. Air moving device **10**, in this embodiment, comprises a permanent magnet **26** (not shown) mounted to the backside (nonair moving side) of impeller **18** and a drive shaft **16**. Consequently, this application of the invention will eliminate the need for remote mounted blowers particularly in environments where space is at a premium.

While the invention has been described with a certain degree of particularity, it is manifest that many changes may be made in the details of the construction and the arrangement of components without departing from the spirit and scope of this disclosure. It is understood that the invention is not limited to the embodiments set forth herein for purposes of exemplification, but is to be limited only by the scope of the attached claim or claims, including the full range of equivalency to which each element thereof is entitled.

### Parts List

- 1: tubeaxial fan
- 10: air moving device
- 12: support means, base plate
- 14: bearing
- 16: rotatable/drive shaft
- 18, 18': impellers
- 20: air moving side
- 22: backside
- 24: fins
- 26: magnetic member or permanent magnet
- 30: drive means or motor
- 32: electromagnetic/metallic coils
- 34: circuit board
- 36: drivemeans
- 41: common bearing
- 42: shared shaft
- 47: base assembly
- 48: flux return plate
- 49: heat sink

## Claims

1. An air moving device, comprising:
a support means;
at least one bearing supported in said support means;
a rotatable shaft passing through said support means;
an impeller fixedly supported to the ratable shaft, said shaft defining a central axis passing through said support means, and wherein said impeller includes a front air moving and backside, and a plurality of spatially separated backward curved fins arranged symmetrically on said front air moving side about said central axis;
a magnetic member arranged about said backside of said impeller;
means for rotating the rotatable shaft, said means for rotating comprising a plurality of electromagnetic coils arranged for commutatively cooperating with said magnetic member; and,
means for actuating said means for rotating, said means for actuating providing the commutation current to produce rotational movement of said impeller, and wherein said rotational movement of said impeller can achieve a speed in the range of about 4000 RPM to about 15000 RPM and deliver a static pressure of up to about 15 mm of Hg.

2. The device recited in claim 1 having a height (h) of about 1.125 inches (2.875 cm), a length (l) from about 2 inches (5.08 cm) to about 6 inches (15.24 cm), and a width (w) from 2 inches (5.08 cm) to about 6 inches (15.24 cm).

3. The air moving device recited in claim 1, wherein said drive means comprises a compact dc planar motor.

4. The device recited in claim 1, wherein said magnetic member is a multipole permanent magnet.
